(19) Europäisches Patentamt
European Patent Office
Office européen des brevets

(11) Veröffentlichungsnummer: **0 111 917**
**B1**

(12) # EUROPÄISCHE PATENTSCHRIFT

(45) Veröffentlichungstag der Patentschrift: **18.03.87**

(21) Anmeldenummer: **83112754.3**

(22) Anmeldetag: **19.12.83**

(51) Int. Cl.[4]: **C 08 F 214/06**, C 08 F 255/02, C 08 L 51/00, C 08 L 27/06, H 01 M 2/16, C 08 F 263/04 // (C08F255/02, 214:06)

(54) **Sinterfähige, feinteilige Formmasse auf Basis Polyvinylchlorid.**

(30) Priorität: **22.12.82 DE 3247472**

(43) Veröffentlichungstag der Anmeldung: **27.06.84 Patentblatt 84/26**

(45) Bekanntmachung des Hinweises auf die Patenterteilung: **18.03.87 Patentblatt 87/12**

(84) Benannte Vertragsstaaten: **BE DE FR GB IT NL**

(56) Entgegenhaltungen:
**EP-A-0 040 758**
**FR-A-2 200 287**
**FR-A-2 367 794**
**GB-A-1 172 722**

(73) Patentinhaber: **HOECHST AKTIENGESELLSCHAFT, Postfach 80 03 20, D-6230 Frankfurt am Main 80 (DE)**

(72) Erfinder: **Engelmann, Manfred, Dr., Kantstrasse 5, D-8269 Burgkirchen (DE)**
Erfinder: **Plewan, Otto, Bischof- Sailer- Strasse 15, D-8265 Neuötting (DE)**
Erfinder: **Kraus, Helmut, Dr., Donaustrasse 32b, D-8266 Töging (DE)**
Erfinder: **Klippert, Heinz, Dr., Hochfellnstrasse 14, D-8269 Burgkirchen (DE)**

**EP 0 111 917 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft eine Formmasse aus sinterfähigem, durch Copolymerisation oder Pfropf-Copolymerisation in wäßriger Suspension hergestelltem Polymerem, das überwiegend polymerisierte Vinylchlorid-Einheiten enthält, ein Verfahren zu deren Herstellung und deren Verwendung zur Herstellung von Separatorplatten für elektrische Zellen.

Es ist bekannt, Polyvinylchlorid zur Herstellung von gesinterten Formkörpern, beispielsweise von Separatorplatten für elektrische Zellen, einzusetzen.

Entprechende Formmassen wurden in DE-A- 21 27 654, 23 10 431, 26 46 595 und 30 18 922 beschrieben.

Alle diese Formmassen ergeben gesinterte Formkörper, beispielsweise Separatorplatten, die vergleichsweise hart und steif sind, so daß sie bei Biegung um eine feste Kante bereits bei Biegewinkeln unter 180 ° ganz oder teilweise brechen. Solche Materialien sind zur Herstellung von sogenannten Separator-Taschen ungeeignet, da hierzu flexible Platten benötigt werden, die auch bei Biegung um 180 ° keine Risse aufweisen.

Es wurde nun eine Formmasse gefunden, die sich zu gut flexiblen Formkörpern sintern läßt und die beschriebenen Nachteile nicht aufweist.

Diese sinterfähige, feinteilige Formmasse auf Basis Polyvinylchlorid mit einem K-Wert von 55 bis 90, einem Schüttgewicht von 400 bis 700 g/l, einer mittleren Korngröße von 10 bis 50 µm und einer Kornverteilung von

| | |
|---|---|
| 99 bis 30 Gew.-% | < 33 µm |
| 1 bis 60 Gew.-% | von 33 bis 63 µm |
| 0 bis 9 Gew.-% | von 63 bis 125 µm |
| 0 bis 1 Gew.-% | > 125 µm |

besteht aus:

I) 99,8 bis 97 Gew.-%, bezogen auf die Formmasse, eines durch Suspensionspolymerisation in wäßriger Phase hergestellten Pfropf-Copolymerisats, das seinerseits besteht aus, jeweils bezogen auf das Pfropf-Copolymerisat:

a) 95 bis 70 Gew.-% Polymerisierten Einheiten des Vinylchlorids,

b) 4,4 bis 29,4 Gew.-% polymerisierten Einheiten mindestens eines Acrylsäurealkylesters mit 3 bis 10 C-Atomen in der Alkylgruppe,

c) 0,3 bis 7 Gew.-% polymerisierten Einheiten des Ethylens und

d) 0,3 bis 15 Gew.-% polymerisierten Einheiten des Vinylacetats,

mit der Maßgabe, daß die Menge von d) mindestens 3/7 der Menge von c) und die Summe der Mengen von b) plus c) plus d) 5 bis 30 Gew.-% beträgt; ferner

II) 0,05 bis 0,5 Gew.-% von mindestens einem anionischen oder/und von mindestens einem nicht-ionischen Emulgator mit einem HLB-Wert von 10 bis 40,

III) einem Rest, bestehend aus Suspendiermittel(n), Resten von Aktivatoren und anderen Polymerisationshilfsstoffen, sowie gegebenenfalls geringen Mengen weiterer Zusatzstoffe, mit der Maßgabe, daß die Summe der Mengen von I plus II plus III 100 Gew.-% beträgt.

Wenn der Anteil der Formmasse an Polymerem weniger als 4,4 Gew.-% polymerisierte Einheiten des Acrylsäurealkylesters enthält, zeigen die daraus hergestellten Separatorplatten keine ausreichende Flexibilität. Beträgt der Gehalt mehr als 29,4 Gew.-% polymerisierte Einheiten des Acrylsäurealkylesters, so ist die Formmasse nicht mehr gut zu porösen Formkörpern sinterfähig, da die einzelnen Polymerkörner zu stark miteinander verschmelzen. Außerdem würde die Anwendung höherer Mengen Acrylsäurealkylester das Produkt unnötig verteuern. Vorzugsweise enthält der Anteil des Polymeren in der Formmasse 10 bis 20 Gew.-% Acrylsäurealkylester.

Die Alkylgruppe des Acrylsäurealkylesters soll 3 bis 10 C-Atome haben. Ester mit Alkylgruppen von weniger als 3 und mehr als 10 C-Atomen geben keine genügende Flexibilität der gesinterten Formkörper.

Geeignete Acrylsäurealkylester sind solche, die als Homopolymerisate Glasumwandlungstemperaturen (Tg) von 203 bis 248 K aufweisen, beispielsweise n-Propylacrylat, n-Hexylacrylat, Cyclohexylacrylat, n-Octylacrylat, n-Decylacrylat, Ethylhexylacrylat, iso-Butylacrylat, n-Butylacrylat.

Bevorzugt werden Acrylsäurealkylester verwendet, deren Alkylgruppe 4 bis 8 C-Atome enthält.

Formmassen, die im Polymerenanteil nur polymerisierte Einheiten von Vinylchlorid und Acrylsäurealkylester enthalten, ergeben bereits flexible gesinterte Formkörper, beispielsweise Separatorplatten für elektrische Zellen.

Diese können verbessert werden, wenn der Polymeranteil der Formmasse zusätzlich polymerisierte Einheiten von Vinylacetat enthält.

Eine weitere Verbesserung ist zu beobachten, wenn der Polymeranteil der Formmasse polymerisierte Einheiten des Vinylacetats und des Ethylens enthält mit der Maßgabe, daß die Menge der polymerisierten Vinylacetat-Einheiten mindestens 3/7 der Menge der polymerisierten Ethylen-Einheiten beträgt.

Liegt der Gehalt an polymerisierten Einheiten des Vinylacetats unter 3/7 der Menge der polymerisierten Einheiten des Ethylens, macht die Herstellung der Formmassen Schwierigkeiten, es tritt Klumpenbildung bei

der Polymerisation auf, die erwünschte Gleichmäßigkeit der erzeugten Polymerkörner, die ihrerseits eine gleichmäßige Porengrößen-Verteilung im gesinterten Formkörper zur Folge hat, wird nicht mehr erreicht.

Höhere Anteile als 15 Gew.-% polymerisierte Vinylacetat-Einheiten im Polymeranteil der Formmasse beeinflussen die Flexibilität der gesinterten Formkörper negativ. Gute Ergebnisse werden erhalten, wenn der Polymeranteil der Formmasse 0,3 bis 11 Gew.-% polymerisierte Einheiten des Vinylacetats enthält. Das Vinylacetat wird einerseits als solches, andererseits auch als Mischpolymerisat mit Ethylen im Gewichtsverhältnis 70/30 bis 30/70 zur Polymerisation von Vinylchlorid zwecks Herstellung der Formmasse eingesetzt.

Wenn der Polymeranteil der Formmasse mehr als 7 Gew.-% polymerisierte Einheiten des Ethylens enthält, wird die Teilchengröße der Formmasse ungleichmäßig. Die zur Herstellung gesinterter Separatorplatten erforderliche Teilchengrößen-Verteilung kann nicht mehr eingehalten werden. Ferner tritt eine unnötige Verteuerung des Verfahrens ein, da zur Herstellung von Formmassen mit höheren Ethylen-Gehalten größere Suspendiermittel-Mengen benötigt werden. Vorzugsweise enthält der Polymeranteil der Formmasse 0,3 bis 2,5 Gew.-% polymerisierte Einheiten des Ethylens.

Bei der Herstellung der Polymerisate werden neben Acrylsäurealkylestern ein Ethylen-Vinylacetat-Mischpolymerisat und gegebenenfalls noch monomeres Vinylacetat zur Verbesserung der Eigenschaften des Polymeranteils der Formmasse eingesetzt. Hierbei ist der entsprechende Anteil einpolymerisierter Einheiten des Ethylens und des Vinylacetats bei der Menge der einpolymerisierten Einheiten des Acrylsäurealkylesters zu berücksichtigen, so daß die Formmasse in jedem Fall 95 bis 70 Gew.-% polymerisierte Einheiten des Vinylchlorids enthält. Bei über 95 Gew.-% polymerisierten Einheiten des Vinylchlorids im Polymeranteil der Formmasse sind die aus der Formmasse erzeugten Sinterkörper, beispielsweise Separatorplatten, nicht ausreichend flexibel. Unter 70 Gew.-% polymerisierten Einheiten des Vinylchlorids werden die Herstellkosten der Formmasse unnötig verteuert, wobei keine zusätzlichen Vorteile, oft sogar Nachteile beobachtet werden.

Neben einem Anteil an Polymerem von 99,8 bis 97 Gew.-% enthält die Formmasse noch 0,05 bis 0,5 Gew.-% von mindestens einem anionischen oder von mindestens einem nichtionischen Emulgator, der einen HLB-Wert von 10 bis 40 aufweist. Es können auch Mischungen von mehreren solcher Emulgatoren eingesetzt werden, wobei die Mischung einen HLB-Wert von 10 bis 20 aufweisen soll.

Der HLB-Wert kann nach verschiedenen Methoden bestimmt werden, siehe Römpps Chemie Lexikon, 7. Auflage, Stuttgart, 1973, Band 3 H - L, Seite 1478, rechte Spalte. Geeignete Emulgatoren sind beispielsweise die Alkali-, Erdalkali- oder Ammoniumsalze von Fettsäuren wie Laurin-, Palmitin- oder Stearinsäure; von sauren Fettalkohol-Schwefelsäureestern, von Sulfobernsteinsäuredialkylestern, sowie die Alkali- und Ammoniumsalze von epoxygruppenhaltigen Fettsäuren wie Epoxystearinsäure, von Umsetzungsprodukten von Persäuren, zum Beispiel Peressigsäure mit ungesättigten Fettsäuren wie Öl- oder Linolsäure, oder ungesättigten Oxyfettsäuren wie Rizinolsäure, ferner Alkylsulfonsäuren mit mindestens 8 C-Atomen sowie Alkylarylsulfonsäuren mit mindestens 3 C-Atomen in der Alkylkette, wie Dodecylbenzol- oder Dibutylnaphthalinsulfonsäuren und deren Alkali-, Erdalkali- oder Ammoniumsalze.

Weiterhin Oxyethylen-Gruppen enthaltende Fettsäure-Teilester mehrwertiger Alkohole wie Polyoxyethylenglycerinmonostearat; Polyoxyethylen-sorbitanmonolaurat, -oleat, -palmitat oder -stearat; Polyoxyethylenester von Fettalkoholen oder aromatischen Hydroxyverbindungen; Polyoxyalkylenester von Fettsäuren, sowie Polypropylenoxid-Polyethylenoxid-Kondensationsprodukte.

Kationische Emulgatoren ergeben zwar ebenfalls sinterfähige Formmassen, doch sind sie weniger vorteilhaft bei der Polymerisation verwendbar, da sie lange Polymerisationszeiten bewirken, so daß sie einen zu hohen Initiator-Einsatz erfordern, um wirtschaftlich vertretbar arbeiten zu können.

Liegt der HLB-Wert des in der Formmasse enthaltenen Emulgators oder Emulgatorgemisches unter 10, so werden gesinterte Formkörper, beispielsweise Separatorplatten für elektrische Zellen erhalten, die nicht genügend benetzbar sind und eine nicht ausreichende kapillare Steighöhe (Bestimmungsmethode siehe später) aufweisen. Das gleiche gilt für einen Emulgatorgehalt der Formmasse von weniger als 0,05 Gew.-% (bezogen auf die Formmasse). Liegt der Emulgatorgehalt über 0,5 Gew.-% (bezogen auf die Formmasse), können Schwierigkeiten bei der Herstellung des Polymeren auftreten. In einigen Fällen wird eine Verschlechterung der Thermostabilität oder der Rieselfähigkeit sowie Neigung zum Kleben an Apparateteilen beobachtet. Im allgemeinen sind Emulgatoren bzw. Emulgatorgemische mit einem HLB-Wert von 10 bis 20 geeignet, in Ausnahmefällen kann der HLB-Wert des verwendeten Emulgators bis zu 40 betragen.

Neben dem Polymeren und Emulgator(en) enthält die Formmasse noch einen Rest, der aus Suspendiermittel(n), Resten von Aktivatoren und anderen Polymerisations-Hilfsstoffen sowie gegebenenfalls geringen Mengen weiterer Zusatzstoffe besteht. Solche Zusatzstoffe können beispielsweise sein. Antioxidantien, Thermostabilisatoren, Pigmente, Netzmittel sowie Mittel zur Verbesserung der antistatischen Eigenschaften.

Gesinterte, flexible Formkörper, insbesondere Separatorplatten für elektrische Zellen, mit besonders guten Eigenschaften werden aus Formmassen erhalten, die als Emulgator mindestens eine der folgenden freien Sulfosäuren enthalten:

Alkylsulfonsäuren mit 8 bis 16 C-Atomen in der Alkylgruppe und Alkylarylsulfonsäuren mit 3 bis 16 C-Atomen in der Alkylkette und als weiteren Zusatzstoff 0,005 bis 0,5 Gew.-%, bezogen auf die Formmasse, von mindestens einem wasserlöslichen Netzmittel, das 12 bis etwa 50 C-Atome und ein quartäres N-Atom enthält, welches mit einer Carbon- oder Sulfonsäuregruppe ein Salz bildet. Solche Formmassen ergeben Separatorplatten für elektrische Zellen mit besonders guter mechanischer Festigkeit und Dehnbarkeit, bei

guter kapillarer Steighöhe.

Bei einem Gehalt der Formmassen an den genannten Sulfonsäuren von weniger als 0,05 Gew.-%, bezogen auf die Formmasse, wird eine Verschlechterung der mechanischen Eigenschaften der aus der Formmasse hergestellten Sinterplatten festgestellt. Steigt der Gehalt der Formmassen an freien Sulfonsäuren über 0,5 Gew.-%, so sind die mechanischen Eigenschaften der gesinterten Platten zwar immer noch gut, jedoch treten bei der Verarbeitung der Formmassen in zunehmendem Maß Schwierigkeiten wegen mangelnder Thermostabilität auf. Außerdem verteuern höhere Gehalte an freien Sulfosäuren die Formmasse. Bevorzugt werden Formmassen eingesetzt, die 0,05 bis 0,25 Gew.-%, bezogen auf die Formmasse, mindestens einer der weiter oben genannten freien Sulfosäuren enthalten.

Die Menge des Netzmittels in der Formmasse soll 0,005 bis 0,5 Gew.-%, bezogen auf die Formmasse, betragen. Unter 0,005 Gew.-% wird die für eine gute Separatorplatten-Qualität erforderliche kapillare Steighöhe nicht erreicht. Oberhalb 0,5 Gew.-% Netzmittel besteht in zunehmendem Maße die Gefahr des Schäumens, wenn die Separatorplatten in elektrischen Zellen eingesetzt werden, in denen sich beim Gebrauch oder während der Aufladung Gas entwickelt, oder die während des Gebrauchs häufigen mechanischen Erschütterungen unterliegen. Gute Ergebnisse werden erhalten, wenn die Formmassen 0,01 bis 0,1 Gew.-% von mindestens einem der beschriebenen Netzmittel enthalten.

Das verwendete Netzmittel soll ausreichend, das heißt bei 20 °C zu mehr als 2 Gew.-% in Wasser löslich sein, 12 bis etwa 50 C-Atome und ein quartäres N-Atom enthalten, welches mit einer Carbon- oder Sulfonsäuregruppe ein Salz bildet. Unter einem "quartären N-Atom" ist ein N-Atom zu verstehen, das eine positive Ladung trägt und 4 Bindungen betätigt, wovon 1 bis 4 Bindungen mit C-Atomen und der Rest (3 bis 0) Bindungen mit H-Atomen sind.

Vorzugsweise werden als Netzmittel Verbindungen folgender Formeln eingesetzt:

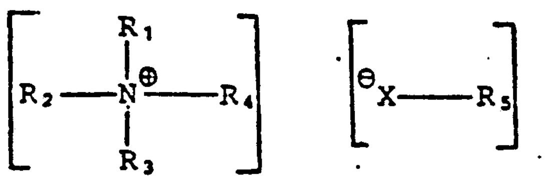

(I)

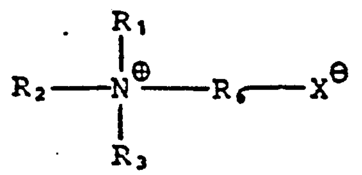

(II)

hierin bedeuten X eine $-COO^-$ oder eine $-SO_3^-$ -Gruppe $R_1$ Wasserstoff oder eine Alkyl- oder eine Arylalkyl-Gruppe,

$R_2$, $R_3$ und $R_4$, jedes für sich eine Alkyl- oder eine Arylalkyl-Gruppe, die gegebenenfalls in der Alkylkette durch Ether-Sauerstoffbrücken unterbrochen sein kann, insbesondere so, daß $-C_2H_4O-$ oder $-C_3H_6O-$Gruppen in der Kette liegen.

$R_5$ einen Alkyl- oder Alkylaryl-Rest und

$R_6$ einen Alkylen-Rest, wobei alle Reste $R_1$ bis $R_6$ und gegebenenfalls auch X zusammen 12 bis etwa 50 Kohlenstoffatome enthalten und mindestens einer der Reste $R_1$ bis $R_4$ sowie der Rest $R_5$ je mindestens 8 Kohlenstoffatome enthalten.

Es können auch Mischungen mehrerer der oben näher beschriebenen Netzmittel verwendet werden.

Der K-Wert des in der Formmasse enthaltenen Pfropf-Copolymerisates liegt zweckmäßig im Bereich von 55 bis 90. Unterhalb eines K-Wertes von 55 und oberhalb eines K-Wertes von 90 sind die Formmassen schwerer zu verarbeiten und ergeben im allgemeinen gesinterte Platten von geringerer Qualität.

Das Schüttgewicht der Formmassen liegt zweckmäßig im Bereich von 400 bis 700 g/l. Niedrigere Schüttgewichte führen im allgemeinen zu geringerem Produktionsausstoß sowie zu grobporigeren Platten mit weniger guten mechanischen Eigenschaften, höhere Schüttgewichte führen im allgemeinen zu Platten mit unerwünscht hohem elektrischem Durchgangswiderstand. Vorzugsweise werden Formmassen mit einem Schüttgewicht von 450 bis 600 g/l eingesetzt.

Zur Herstellung von gesinterten Platten, die als Separatoren für elektrische Zellen Verwendung finden, sollte die Formmasse eine mittlere Korngröße (mittleren Korndurchmesser), gemessen durch Sedimentationsanalyse, von 10 bis 50 µm besitzen. Oberhalb einer mittleren Korngröße von 50 µm neigen die hergestellten Platten in zunehmendem Maße zur Grobporigkeit, unterhalb 10 µm mittlerer Korngröße ist es im allgemeinen zu schwierig, noch ausreichend durchlässige Platten zu erzeugen. Vorzugsweise werden Formmassen mit einer mittleren Teilchengröße von 20 bis 35 µm eingesetzt. Für die Bestimmung der mittleren Teilchengröße empfiehlt sich die Sedimentationsanalyse, da sie Teilchengrößenbereiche unter 33 µm genauer erfaßt und weniger anfällig gegen Störungen infolge elektrostatischer Aufladung der Polymerteilchen ist.

Gegenstand der Erfindung ist ferner ein Verfahren zur Herstellung einer oben näher beschriebenen Formmasse durch Suspensions-Polymerisation von Vinylchlorid in wäßriger Phase in Gegenwart von öllöslichen, radikalisch zerfallenden Aktivatoren, Suspensionsstabilisatoren, freien Emulgatoren und gegebenenfalls weiteren Polymerisations-Hilfsstoffen, bis zu Vinylchlorid-Umsätzen von 70 bis 95 Gew.-%, Abtrennen der Hauptmenge der wäßrigen Phase und Trocknung des Polymerisates, wobei gegebenenfalls nach der Abtrennung der wäßrigen Phase oder nach der Trocknung weitere Stoffe in feiner Verteilung dem Polymerisat zugesetzt werden, dadurch gekennzeichnet, daß man Vinylchlorid in Gegenwart von mindestens einem Acrylsäurealkylester mit 3 bis 10 C-Atomen in der Alkylgruppe sowie in Gegenwart oder Abwesenheit von Vinylacetat, ferner in Gegenwart eines Mischpolymerisates, das seinerseits besteht aus:

30 bis 70 Gew.-%, bezogen auf das Mischpolymerisat, polymerisierten Einheiten des Ethylens und

70 bis 30 Gew.-%, bezogen auf das Mischpolymerisat, polymerisierten Einheiten des Vinylacetats, welches ferner ein mittleres Molekulargewicht, osmotisch gemessen, von 5 000 bis 200 000 aufweist, weiterhin in Gegenwart von

0,01 bis 0,7 Gew.-%, bezogen auf eingesetzte Monomere, mindestens eines anionischen oder/und mindestens eines nichtionischen Emulgators mit einem HLB-Wert von 10 bis 40 polymerisiert, wobei die Mengen der einzusetzenden Monomeren und gegebenenfalls des Mischpolymeren, unter Berücksichtigung des Vinylchlorid-Umsatzes so gewählt werden, daß ein (Pfropf)-Copolymerisat gebildet wird, welches in seiner Zusammensetzung den Angaben des Anspruchs 1 entspricht, nach Beendigung der Polymerisation und nach Abtrennung der Hauptmenge der wäßrigen Phase im gebildeten (Pfropf)-Copolymerisat den Emulgator-Gehalt bestimmt und soviel von den in Anspruch 1 genannten Emulgatoren dem Polymerisat in feinverteilter Form zusetzt, daß das polymerisat insgesamt

0,05 bis 0,5 Gew.-%, bezogen auf das getrocknete Polymerisat, der genannten Emulgatoren enthält.

Die Polymerisation wird in druckfesten Apparaturen unter Bewegung der Polymerisationsflotte bei Temperaturen von 45 bis 70 °C durchgeführt. Je 100 Teile eingesetzten monomeren Vinylchlorids werden zweckmäßig etwa 150 bis 300 Teile Wasser, 0,01 bis 0,2 Teile eines für die Suspensions-Polymerisation von Vinylchlorid bekannten öllöslichen, radikalisch zerfallenden Aktivators oder eines Gemisches aus mehreren solcher Aktivatoren sowie 0,05 bis 3 Gewichtsteile eines für die Suspensions-Polymerisation von Vinylchlorid üblichen bekannten Suspendiermittels, beispielsweise eines Celluloseethers oder teilverseiften Polyvinylacetats oder auch Gemischen mehrerer solcher Suspendiermittel eingesetzt. Bei der Polymerisation können ferner bekannte Kettenabbruchmittel und/oder Antioxidantien sowie weitere Polymerisations-Hilfsstoffe zugesetzt werden.

Die Polymerisation wird bis zu Umsätzen von 70 bis 95 Gew.-%, bezogen auf eingesetztes monomeres Vinylchlorid, fortgeführt. Es werden zwar auch bei geringeren Umsatzgraden noch im Sinne der Erfindung gut brauchbare Formmassen erhalten, doch sind niedrigere Umsatzgrade weniger wirtschaftlich und bieten im allgemeinen keine sonstigen Vorteile. Ebenso ist eine Weiterführung der Polymerisation zu Umsätzen von über 95 Gew.-% Vinylchlorid nachteilig, da hierfür erheblich verlängerte Polymerisationszeiten benötigt werden, die die Raum-Zeit-Ausbeute an Polymeren deutlich vermindern. Dieser Nachteil könnte zwar teilweise durch Zugabe erhöhter Aktivatormengen ausgeglichen werden, doch tritt hierdurch eine unnötige Verteuerung ein. Vorzugsweise wird im Bereich von 85 bis 95 Gew.-% Vinylchlorid-Umsatz gearbeitet.

Das Vinylchlorid wird in Gegenwart von Acrylsäurealkylester und gegebenenfalls in Gegenwart von Vinylacetat polymerisiert.

Es wird zusätzlich in Gegenwart eines Ethylen-Vinylacetat-Mischpolymerisates polymerisiert, das 30 bis 70 Gew.-% polymerisierte Einheiten des Ethylens und 70 bis 30 Gew.-% polymerisierte Einheiten des Vinylacetats (Prozentangaben jeweils bezogen auf das Mischpolymerisat) enthält.

Bei Gehalten des Mischpolymerisates an Ethylen-Einheiten über 70 Gew.-% treten Schwierigkeiten bei der Polymerisation des Vinylchlorid-Acrylsäurealkylester-Gemisches durch Klumpenbildung auf. Enthält das Mischpolymerisat über 70 Gew.-% an Vinylacetat-Einheiten, kann die Formmasse nicht mehr genügend gleichmäßig feinteilig hergestellt werden. Bevorzugt besteht das Mischpolymerisat aus 60 bis 40 Gew.-% polymerisierten Einheiten des Ethylens und 40 bis 60 Gew.-% polymerisierten Einheiten des Vinylacetats und hat ein mittleres Molekulargewicht, osmotisch gemessen, von 15 000 bis 50 000.

Das Vinylchlorid wird in Gegenwart von soviel Acrylsäurealkylester, in Gegenwart oder Abwesenheit von soviel Vinylacetat sowie in Gegenwart von soviel Ethylen-Vinylacetat-Mischpolymerisat polymerisiert, daß unter Berücksichtigung des bei der Polymerisation erzielten Vinylchloridumsatzes der Polymeranteil der Formmasse die weiter oben näher beschriebenen Anteile an polymerisiertem Vinylchlorid, Acrylsäurealkylester, gegebenenfalls Ethylen und Vinylacetat, enthält. Die Berechnung der erforderlichen Mengen der Ausgangsstoffe ist möglich, beispielsweise wie beschrieben von H.G. Elias in "Makromoleküle" Verlag Hüthig und Wepf, Heidelberg, 1971, Seiten 632 ff.

Nachfolgende Tabelle zeigt zwei typische Beispiele von bei verschiedenen Vinylchlorid-Umsätzen erzielbaren Polymerisaten bei vorgegebenen Mengen der Ausgangsstoffe:

| Ausgangsstoffe, bezogen auf Vinylchlorid .(in Gew.-%) | Im fertigen Polymerisat enthaltene Komponenten, bezogen auf Polyvinylchlorid (in Gew.-%) | | | |
|---|---|---|---|---|
| | Vinylchlorid-Umsätze | | | |
| | 70 % | 80 % | 90 % | 95 % |
| 1 Mischpolymerisat Ethylen-Vinylacetat | 1,43 | 1,25 | 1,10 | 1,05 |
| 15 Acrylsäure-2-ethylhexylester | 20,4 | 18,6 | 16,7 | 15,8 |
| 5 Vinylacetat | 2,5 | 3,0 | 3,8 | 4,3 |
| 3 Mischpolymerisat Ethylen-Vinylacetat | 4,3 | 3,8 | 3,3 | 3,2 |
| 20 Acrylsäure-2-ethylhexylester | 27,1 | 24,8 | 22,1 | 21,1 |
| 3 Vinylacetat | 1,5 | 1,8 | 2,3 | 2,6 |

Der erreichte Vinylchlorid-Umsatz ist auch bei der Zugabe des Emulgators beziehungsweise der Emulgatoren zur Polymerisationsmischung zu berücksichtigen. Es wird in Gegenwart von 0,01 bis 0,7 Gew.-%, bezogen auf eingesetzte Monomere, von einem oder mehreren der weiter oben näher beschriebenen Emulgatoren polymerisiert, nach Beendigung der Polymerisation und nach Abtrennung der Hauptmenge der wäßrigen Phase im gebildeten (Pfropf)-Copolymerisat der Gehalt an freien Sulfonsäuren bestimmt und soviel von den auf Seiten 7 bis 8 genannten freien Sulfonsäuren und Netzmitteln dem Polymerisat in feinverteilter Form zugesetzt, daß das Polymerisat insgesamt 0,05 bis 0,5 Gew.-%, bezogen auf das trockene Polymerisat, der genannten freien Sulfonsäuren und 0,005 bis 0,5 Gew.-%, bezogen auf das trockene Polymerisat, der genannten Netzmittel enthält.

Zur Herstellung der Formmasse kann der Acrylsäurealkylester nach verschiedenen Verfahren mit dem Vinylchlorid polymerisiert werden.

So werden beispielsweise Vinylchlorid und Acrylsäurealkylester gemeinsam vorgelegt und dann mit der Polymerisation begonnen oder es wird Vinylchlorid polymerisiert und in die polymerisierende Mischung Acrylsäurealkylester portionsweise oder kontinuierlich eingetragen, wenn der Vinylchlorid-Umsatz einen bestimmten Wert unter 70 % erreicht hat oder es wird eine Kombination der beiden vorgenannten Verfahren angewendet, wobei ein Teil der insgesamt einzusetzenden Menge Acrylsäurealkylester, zusammen mit dem Vinylchlorid, vorgelegt und dann die Polymerisation begonnen.

Wenn der Vinylchlorid-Umsatz einen bestimmten Wert unter 70 % erreicht hat, wird die Restmenge Acrylsäurealkylester portionsweise oder kontinuierlich zu der polymerisierenden Mischung gegeben.

Mit dem gegebenenfalls einzusetzenden, monomeren Vinylacetat kann ebenso verfahren werden wie mit dem Acrylsäurealkylester.

Das Ethylen-Vinylacetat-Mischpolymerisat wird zweckmäßig im vorgelegten Monomeren beziehungsweise Monomerengemisch gelöst.

Nach Beendigung der Polymerisation sowie Abkühlung und Entspannung des Polymerisationsgefäßes und Abtreiben restlicher störender Monomerer wird das gebildete Polymerisat von der wäßrigen Polymerisationsflotte nach üblichen Methoden, beispielsweise durch Filtrieren, Dekantieren oder Zentrifugieren, abgetrennt und der Gehalt des Polymeren an Emulgator, beispielsweise im Methanolextrakt, durch Titration mit Benzyldimethyl-2,2-p-1,1-3,3-tetramethylbutylphenoxyethoxyethylammonium-chlorid bestimmt (siehe Zeitschrift "Fette, Seifen, Anstrichmittel", Band 73 (1971), Seite 683; deutsche Einheitsmethoden zur Untersuchung von Fetten, Fettprodukten und verwandten Stoffen, 43. Mitteilung, Prof. Seber, "Analyse von organischen, grenzflächenaktiven Stoffen II"; siehe auch "Die Analytik der Tenside" von R. Wickbold, Firmenschrift der Hüls AG 1976, Seite 30 ff.).

Aufgrund des Analysenergebnisses wird nun entweder der gleiche Emulgator, der auch bei der Polymerisation verwendet wurde, oder ein anderer Emulgator, der einen HLB-Wert von 10 bis 40 aufweist, dem

Polymerisat zugesetzt, in einer Menge, daß dieses nach seiner Trocknung 0,05 bis 0,5-Gew.-%, bezogen auf das trockene Polymerisat, an Emulgator enthält.

Vorzugsweise wird dem Polymerisat nach der Polymerisation und zweckmäßig nach Abscheidung der Hauptmenge der wäßrigen Polymerisationsflotte mindestens ein wasserlösliches Netzmittel, das 12 bis etwa 50 C-Atome und ein quartäres N-Atom enthält, welches mit einer Carbon- oder Sulfonsäuregruppe ein Salz bildet, zugesetzt in einer Menge, daß das trockene Polymerisat 0,005 bis 0,5 Gew.-% des oder der genannten Netzmittel enthält. Die Zugabe der genannten Verbindungen nach der Polymerisation kann entweder auf das wasserfeuchte Polymerisat oder auf das bereits trockene Polymerisat erfolgen.

Nach der Zugabe der Verbindungen wird das im Gemisch vorhandene Wasser und eventuell weitere leichtflüchtige Substanzen durch übliche Trocknungsmethoden entfernt. Damit ist im allgemeinen die sinterfähige, feinteilige Formmasse gebrauchsfertig. Es können ihr in besonderen Fällen geringe Mengen bestimmter Stoffe, beispielsweise Antioxidantien, Thermostabilisatoren, Pigmente oder Mittel zur Verbesserung der antistatischen Eigenschaften, sofern erforderlich, beigemischt werden.

In einer bevorzugten Ausführungsform des erfindungsgemäßen Verfahrens wird in Gegenwart von 0,01 bis 0,2 Gew.-%, bezogen auf eingesetzte Monomere, der vorstehend genannten Sulfosäuren polymerisiert.

Gegenstand der Erfindung ist ferner die Verwendung der beschriebenen Formmassen zur Herstellung gesinterter Formkörper, insbesondere von Separatorplatten für elektrische Zellen.

Die erfindungsgemäßen Formmassen ermöglichen es, gesinterte, flexible, poröse Formkörper herzustellen, die in den übrigen physikalischen und chemischen Eigenschaften den bisher nur nicht flexibel herstellbaren gesinterten, porösen Formkörpern ebenbürtig sind. Die Formmassen sind problemlos auf den bisher üblichen Verarbeitungsmaschinen einsetzbar und erfordern keine umständliche Nachbehandlung, um die Flexibilität der Formkörper zu erreichen. Wenn gewünscht, können die Formmassen so hergestellt werden, daß sie Sinterplatten von geringerem mittlerem Porendurchmesser bei gleichem spezifischem Durchgangswiderstand, kapillarer Steighöhe, Reißfestigkeit und Reißdehnung ergeben, wodurch die Herstellung von dünneren Separatorplatten unter Materialersparnis möglich wird, die außerdem noch den Vorteil einer geringeren Tendenz zum "Durchwachsen" von leitfähigem Material zeigen. Darüber hinaus haben solche erfindungsgemäßen Formmassen gegenüber bekannten Formmassen mit etwa vergleichbaren Eigenschaften ein höheres Schüttgewicht bei guter Rieselfähigkeit, wodurch die Verarbeitung erleichtert und der Ausstoß der Produktionsmaschinen verbessert wird.

Die nachfolgenden Beispiele und Vergleichsversuche sollen die Erfindung näher erläutern. Der Übersichtlichkeit wegen wurden die Versuchsergebnisse in einer Tabelle zusammengefaßt. Die verschiedenen Eigenschaften wurden nach folgenden Methoden bestimmt:

**K-Wert**: nach DIN 53 726

**Schüttgewicht**: nach DIN 53 468

**Menge an Emulgator**: Durch Titration mit Benzyldimethyl-2,2-p-1,1-3,3-tetramethylbutyl-phenoxyethoxyethylammoniumchlorid gemäß "Deutsche Einheitsmethoden zur Untersuchung von Fetten, Fettprodukten und verwandten Stoffen", 43. Mitteilung, Prof. Seber: "Analyse von organischen, grenzflächenaktiven Stoffen II" in der Zeitschrift: "Fette, Seifen, Anstrichmittel", Band 73, (1971), Seite 683.

**Kornverteilung**: mittels Luftstrahl-Siebanalyse nach DIN-Entwurf Nr. 53 734.

**Mittlerer Korndurchmesser**: Durch Sedimentationsanalyse nach folgendem Verfahren: 1,82 Gramm Polyvinylchlorid werden in 600 ml einer 0,09 prozentigen Natriumpyrophosphat-Lösung, die gut entgast wurde, dispergiert und mit einer Sartorius-Sedimentationswaage vom Typ 4600 bei einer Vorschubgeschwindigkeit des Registrierpapieres von 120 mm/h die Absitztendenz gemessen. Die Ausrechnung erfolgt nach der bekannten Stoke'schen Formel und ergibt den Teilchenradius. Dieser wird mit dem Körnungsnetz nach Rosin-Ramler und Sperling ausgewertet.

**Rieselfähigkeit**: nach J. Gäbler "Kunststoffe Hoechst" Sonderdruck Nr. 6172 "Prüfung von PVC-Pulvern", Seite 2, punkt 4 (1977). Es wird nach der Methode gearbeitet, bei der sechs Trichter mit verschiedenen Auslauföffnungen mit Pulver gefüllt werden und die Nummer des Trichters angegeben wird, aus dem das Pulver gerade noch frei ausläuft. Je höher die Trichternummer, um so schlechter die Rieselfähigkeit.

**Bestimmungen an der gesinterten platte**

Herstellung der Sinterplatten: Es werden Separatorplatten für elektrische Zellen auf einer kontinuierlichen Band-Sinteranlage hergestellt. Dabei wird auf ein endloses Stahlband Polyvinylchlorid-Pulver in bestimmter Schichtdicke aufgetragen und zur Sinterung durch einen Ofen geleitet, dessen elektrische Heizung auf 325 °C eingestellt ist. Durch Variation der Bandgeschwindigkeit kann die Verweilzeit in der Sinterzone und damit die Stärke der Sinterung des PVC-Pulvers geregelt werden. Die Bandgeschwindigkeit wird auf Werte zwischen 1,5 bis 1,9 m/min, vorzugsweise 1,7 m/min, eingestellt, so daß sich für die fertige Separatorplatte ein elektrischer Widerstand von 1,6 $m\Omega/dm^2$ ergibt. Die Separatorplatten haben eine Blattstärke von 0,2 mm und eine Rippenstärke von 0,7 mm.

**Reißdehnung und Reißfestigkeit**: In Anlehnung an DIN -Vorschrift 53 455 - Zugversuch von Kunststoffen - wird die Reißdehnung (Dehnung bei Reißkraft) und die Reißfestigkeit bestimmt. Da keine genormten Probekörper zur Verfügung stehen, werden aus den gesinterten Platten Prüflinge der Größe 60 . 140 mm geschnitten. Die Prüfung erfolgt auf einer Zugprüfmaschine entsprechend den allgemeinen Bedingungen für Zugprüfmaschinen (DIN 51 220, Klasse 1 sowie DIN 51 221) nach 16stündiger Lagerung im Normklima (DIN 5 001) bei 23 ± 2 °C und 50 ± 5 % relativer Luftfeuchtigkeit. Die Prüfgeschwindigkeit (Geschwindigkeit, mit der sich die beiden Einspannklemmen voneinander entfernen) beträgt 50 mm pro Minute ± 10 %. Der Kraft-Meßbereich liegt bei 10 N. Die Aufzeichnung von Kraft und Dehnung erfolgt über ein Schreibwerk auf einer Diagramm-Rolle. Der dehnungsproportionale Vorschub (Diagramm-Papier: Traverse) wird auf 5 zu 1 vergrößert eingestellt. Die Dehnung ist auf 100 mm freie Einspannlänge bezogen.

**Spezifischer elektrischer Widerstand**: Die Ermittlung des elektrischen Widerstandes von Separatoren erfolgt über Messung des sogenannten Innenwiderstandes von Zellen, die in einer eigens dafür geschaffenen Prüfanordnung (Batterie-Zelle) gemessen wird. Die Differenz des Zellenwiderstandes mit und ohne Separator ergibt den negativen Widerstand des Trennkörpers. Durch Multiplikation mit dem Quotienten aus Plattenfläche durch Plattendicke wird der spezifische Durchgangswiderstand in Ω. cm ermittelt.

Die Prüfzelle selbst besteht aus einer positiven und einer negativen Platte($PbO_2$ und Pb), die im Abstand von 7 mm parallel zueinander angebracht sind. Als Elektroden nimmt man Platten solcher Größe und Bauart, wie sie beim Bleiakkumulator verwendet werden. Genau zwischen den Elektroden, in einer fensterförmigen Aussparung der Größe 100 . 100 mm, befindet sich der Separator. Die Prüfzelle ist mit Schwefelsäure der Dichte 1,28 g pro $cm^3$ gefüllt und voll aufgeladen. Die Messung solcher niederohmigen Innenwiderstände wird mit einem direkt anzeigenden Mikro-Ohm-Meter (Typ EMT 326, Firma Elektromeßtechnik E. Franz KG, Lahr) vorgenommen, welches an den beiden Elektroden angeschlossen ist. Sie erfolgt mit Netz-Wechselstrom.

**Kapillare Steighöhe**: Als Maß für die Benetzbarkeit der Separatorplatten und zur Charakterisierung der Porosität dient die Ermittlung der kapillaren Steighöhe. Dabei wird ein 1 cm breiter Streifen des Separators in eine Proberöhre gestellt, die 1,5 cm hoch mit Wasser gefüllt ist. Als kapillare Steighöhe wird die Höhe der Benetzbarkeit in Millimeter nach einer Tauchzeit von 10 Minuten angegeben.

**Flexibilität**: Aus den wie weiter oben beschrieben hergestellten gesinterten Platten werden Prüflinge der Größe 90 . 140 mm so herausgeschnitten, daß die Rippen parallel der 140 mm langen Schnittkante verlaufen. Dieser Prüfkörper wird zwischen zwei ebenen Metallplatten von je 2 mm Stärke, die die Maße 120 . 100 mm aufweisen und deckend übereinander liegen, so eingespannt, daß etwa die Hälfte des Prüfkörpers über die Platten hinausragt und die Rippen des Prüfkörpers senkrecht zu den Kanten der beiden Metallplatten verlaufen, über die der Prüfkörper hinausragt. Die beiden Metallplatten sind waagerecht liegend angeordnet, die Rippen des Prüfkörpers sollen nach unten gerichtet sein. Die Kante der oben liegenden Metallplatte, über die der Prüfkörper hinausragt, ist halbkreisförmig gerundet. Um diese Kante wird nun der herausragende Teil des Prüfkörpers innerhalb etwa 30 s um 180 ° nach oben umgebogen, so daß der umgebogene, herausragende Teil des Prüfkörpers auf der Oberfläche der oberen Metallplatte liegt. Zum Umbiegen wird eine weitere Metallplatte benutzt, die den herausragenden Teil des Prüfkörpers von unten erfaßt und um 180 ° wendet. Nach abgeschlossener Wendung wird die Stelle des Prüflings, die um die gerundete Kante der oberen Metallplatte herumgebogen wurde, auf Risse geprüft. Sofern solche Risse auftreten, ist die Platte unbrauchbar. Die Bestimmung wird an jeweils fünf Prüfkörpern nacheinander bei Zimmertemperatur und etwa 60 % relativer Feuchtigkeit durchgeführt. Wenn auch nur ein Riß beobachtet wird, ist dies in nachfolgender Tabelle 2 mit der Bemerkung "Bruch" bezeichnet. Wenn alle fünf Prüfkörper die Bestimmungsmethode ohne Rißbildung überstehen, ist in der Tabelle II "kein Bruch" vermerkt. Solche Platten sind für den vorgesehenen Anwendungszweck brauchbar.

**Vergleichsversuch A**

Ein Gemisch aus Vinylchlorid und den aus Tabelle I unter VA ersichtlichen Zusatzstoffen (GT = Gewichtsteile) wird in einem druckfesten Kessel aus Edelstahl, der mit einem Impellerrührer ausgerüstet ist, bei 53 °C unter Rühren bei autogenem Druck des Vinylchlorids bis zu einem Druckabfall auf 0,4 MPa polymerisiert. Dann wird entspannt, die anfallende feinkörnige Polymerisat-Suspension nach bekannten Verfahren von restlichem monomerem Vinylchlorid befreit und mit einer Dekanter-Zentrifuge das Polymerisat von der Hauptmenge der wäßrigen Polymerisationsflotte getrennt. Das so erhaltene Produkt enthält noch ca. 20 Gew.-%, bezogen auf das Produkt, Wasser. Nun wird das in Tabelle II angegebene Netzmittel unter Bewegung des wasserfeuchten Produktes zugegeben. Die Mengenangaben in Tabelle II sind Gewichtsprozente, bezogen auf das getrocknete Produkt. Nach der Zugabe wird das Produkt mit Heißluft getrocknet.

An der so erhaltenen Formmasse werden die in der Tabelle II angegebenen Eigenschaften ermittelt. Von einem Teil der Formmasse werden Sinterplatten hergestellt und an diesen die Eigenschaften bestimmt, die ebenfalls in der Tabelle II aufgeführt sind. Bestimmungsmethoden und Plattenherstellung sind weiter oben näher beschrieben.

**Beispiele 1 bis 10**

Es wird verfahren wie beim Vergleichsversuch A. Die in Tabelle I unter $B_1$ bis $B_2$ angegebenen Comonomer- u. Mischpolymerisat-Mengen werden vor der Polymerisation in den druckfesten Kessel gegeben, entsprechend wird unter dem autogenen Druck aller anwesender Monomerer bei den in der Tabelle I angegebenen Temperaturen polymerisiert. Nach Abtrennung der Hauptmenge der wäßrigen Polymerisationsflotte nach der

Polymerisation wird vom wasserfeuchten Produkt eine Probe genommen und, wie weiter oben beschrieben, der Emulgatorgehalt bestimmt. Er ist in nachfolgender Tabelle II in Gewichtsprozent, bezogen auf getrocknetes Produkt, aufgeführt. Es werden nun die in Tabelle II nach Art und Menge angegebenen Substanzen unter Bewegung des wasserfeuchten Produktes zugegeben. Die Mengenangaben in der Tabelle II sind Gewichtsprozente, bezogen auf getrocknetes Produkt. Anschließend wird getrocknet wie bei Vergleichsbeispiel A.

Die an der Formmasse und den daraus erzeugten Sinterplatten ermittelten Werte sind in Tabelle II angegeben.

**Vergleichsversuch B** (analog DE-A- 23 10 431)

Es wird verfahren wie beim Vergleichsversuch A. Polymerisationsrezept und -temperatur siehe Tabelle I unter VB. Emulgator-Gehaltsbestimmung und -Zugabe wie bei Beispielen 1 und 2 beschrieben. Nachträglich zugegebene Stoffe nach Art und Menge sowie ermittelte Eigenschaften siehe Tabelle II.

**Vergleichsversuche C und D** (analog DE-A- 30 18 922)

Es wird verfahren wie beim Vergleichsversuch A. Polymerisationsrezept und -temperatur siehe Tabelle I unter VC bzw. VD. Das Ethylen-Vinylacetat-Mischpolymerisat wird unter Rühren bei Zimmertemperatur vor Beginn der Polymerisation im monomeren Vinylchlorid gelöst. Emulgator-Gehaltsbestimmung und -Zugabe wie bei den Beispielen 1 und 2 beschrieben. Nachträglich zugegebene Stoffe nach Art und Menge sowie ermittelte Eigenschaften siehe Tabelle II.

**Beispiele 1 und 7**

Es wird verfahren wie bei den Beispielen 1 bis 10 beschrieben. Das in Tabelle I unter $B_7$ angegebene Comonomere II (VA) wird dem Polymerisationsansatz vor Beginn des Aufheizens zugesetzt, das in Tabelle I unter $B_1$ bzw. $B_7$ angegebene Comonomere I (EHA) wird kontinuierlich in den druckfesten Kessel während der Polymerisation eindosiert. Hiermit wird während des Aufheizens auf die in Tabelle I angegebene Polymerisationstemperatur begonnen und die kontinuierliche Zugabe beendet, wenn 30 % des eingesetzten Vinylchlorids umgesetzt sind. Es wird bis zu einem Druckabfall auf 0,4 MPa polymerisiert, dann entspannt und aufgearbeitet wie beiden Beispielen 1 bis 10 angegeben. Nachträglich zugesetzte Stoffe und ermittelte Eigenschaften siehe Tabelle II.

**Beispiele 2 bis 6 und 8 bis 10**

Es wird verfahren wie bei den Beispielen 1 bis 10 angegeben. Die in Tabelle I unter $B_2$ bis $B_6$ bzw. $B_8$ bis $B_{10}$ angegebenen Comonomeren I und gegebenenfalls II werden dem Polymerisationsansatz vor Beginn der Polymerisation zugesetzt.

Nachträglich zugegebene Stoffe und ermittelte Eigenschaften siehe Tabelle II.

In nachfolgender Tabelle I bedeuten:

GT = Gewichtsteile

Gew.-% VAc = Gewichtsprozent polymerisiertes Vinylacetat, bezogen auf das Ethylenvinylacetat-Copolymerisat (der Rest sind polymerisierte Ethylen-Einheiten)

EHA = 2-Ethylhexylacrylat
BA = n-Butylacrylat
iBA = iso-Butylacrylat
VA = Vinylacetat
DA = n-Decylacrylat
EHPC = Di-2-Ethylhexyl-peroxidicarbonat
IPP = Di-isopropylperoxidicarbonat
LPO = Di-lauroylperoxid
TBPND = tert.-Butyl-perneodecanoat
ACSP = Acetylcyclohexansulfonyl-peroxid

MC 440 = Methylcellulose, deren 2 gew.-%ige wäßrige Lösung bei 20 °C eine Viskosität von 440 mPa · s aufweist

MC 50 = Methylcellulose, deren 2 gew.-%ige wäßrige Lösung bei 20 °C eine Viskosität von 50 mPa · s aufweist

MHPC 50 = Methylhydroxipropylcellulose, deren 2 gew.-%ige wäßrige Lösung bei 20 °C eine Viskosität von 50 mPa · s aufweist

MHPC 100 = Methylhydroxipropylcellulose, deren 2 gew.-%ige wäßrige Lösung bei 20 °C eine Viskosität von 100 mPa · s aufweist.

In den nachfolgenden Tabellen I und II bedeuten:

DBS = n-Dodecylbenzolsulfonsäure
DBSNa = n-Dodecylbenzolsulfonsäure-Natriumsalz
AS = n-Alkansulfonsäure mit verschiedenen Kettenlängen von $C_{12}$ bis $C_{16}$ mit einem überwiegenden Gehalt an $C_{14}$

NaLS = Natriumlaurylsulfonat
POESL = Polyoxiethylen-sorbitanmonolaurat
OS = n-Octylsulfonsäure
PNS = n-Propyl-naphthalinsulfonsäure
CBS = Cetylbenzolsulfonsäure.

TABELLE I

| Beispiel/Vergleichsversuch | | VA | VB | VC | VD | B 1 | $B_2$ | $B_3$ | $B_4$ | $B_5$ |
|---|---|---|---|---|---|---|---|---|---|---|
| Vinylchlorid GT | | 100 | 100 | 100 | 100 | 95 | 90 | 85 | 80 | 80 |
| Comonomer I | GT | - | - | - | - | 5 | 10 | 15 | 10 | 20 |
| | Art | - | - | - | - | EHA | EHA | EHA | EHA | EHA |
| Comonomer II | GT | - | - | - | - | - | - | - | 10 | - |
| | Art | - | - | - | - | - | - | - | BA | - |
| Ethylen-Vinylacetat-Mischpolymerisat | GT | - | - | 1 | 1 | 3 | 1 | 5 | 3 | 1 |
| | Gew.-% VAc | - | - | 45 | 45 | 45 | 45 | 48 | 40 | 45 |
| Wasser | GT | 200 | 198 | 200 | 200 | 200 | 200 | 200 | 200 | 200 |
| Suspendiermittel | GT | 0,5 | 0,5 | 0,2 | 0,2 | 0,2 | 0,2 | 0,6 | 0,6 | 0,3 |
| | Art | MC 440 | MC 440 | MHPC 50 | MHPC 50 | MHPC 50 | MHPC 50 | MHPC 50 | MC 50 | MHPC 50 |
| Emulgator | GT | 0,25 | 0,15 | 0,02 | 0,02 | 0,02 | 0,02 | 0,06 | 0,06 | 0,03 |
| | Art | DBSNa | DBS | DBS | AS | AS | DBS | PNS | DBS | AS |
| Aktivator | GT | 0,06 | 0,02 | 0,02 | 0,04 | 0,04 | 0,06 | 0,05/0,01 | 0,04 | 0,06 |
| | Art | EHPC | IPP | IPP | IPP | IPP | EHPC | LPO/TBPND | IPP | EHPC |
| Polymerisationstemperatur °C | | 53 | 60 | 60 | 55 | 53 | 53 | 66 | 53 | 53 |
| Vinylchlorid-Umsatz % | | 94 | 93 | 92 | 92 | 91 | 94 | 93 | 95 | 94 |

TABELLE I (fortgesetzt)

| Beispiel/Vergleichsversuch | | $B_6$ | $B_7$ | $B_8$ | $B_9$ | $B_{10}$ |
|---|---|---|---|---|---|---|
| Vinylchlorid GT | | 80 | 80 | 80 | 80 | 88 |
| Comonomer | GT | 15 | 15 | 20 | 15 | 10 |
| I | Art | DA | EHA | BA | EHA | EHA |
| Comonomer | GT | 5 | 5 | - | 5 | 2 |
| II | Art | VA | VA | - | iBA | VA |
| Ethylen-Vinylacetat-Mischpolymerisat | GT | 1 | 2 | 1 | 2 | 1 |
| | Gew.-% VAc | 45 | 48 | 48 | 40 | 48 |
| Wasser | GT | 200 | 200 | 200 | 200 | 200 |
| Suspendier- | GT | 0,6 | 0,4 | 0,8 | 0,5 | 0,03 |
| mittel | Art | MC 440 | MC 50 | MC 50 | MHPC 100 | MC 50 |
| Emulgator | GT | 0,06 | 0,06 | 0,08 | 0,03 | 0,04 |
| | Art | OS | DBS | AS | AS | DBS |
| Aktivator | GT | 0,02 | 0,04 | 0,02 | 0,06/0,01 | 0,06 |
| | Art | IPP | IPP | IPP | EHPC/ACSP | EHPC |
| Polymerisationstemperatur °C | | 60 | 53 | 60 | 48 | 53 |
| Vinylchlorid-Umsatz % | | 89 | 90 | 94 | 92 | 91 |

In nachfolgender Tabelle II bedeuten:

DHEA = N-Dodecyl-N-N-dihydroxyethyl-amin

CDMB = N-Cocosalkyl-N,N-dimethyl-betain, wobei "Cocosalkyl" ein Alkylgruppengemisch folgender Kettenlängenverteilung (in %) bedeutet:

$C_8 = 7$; $C_{10} = 6$; $C_{12} = 51$; $C_{14} = 19$; $C_{16} = 8$; $C_{18} = 9$.

SDMB = N-Stearyl-N,N-dimethylbetain

DDMB = N-n-Dodecyl-N,N-dimethyl-betain.

CEOB = 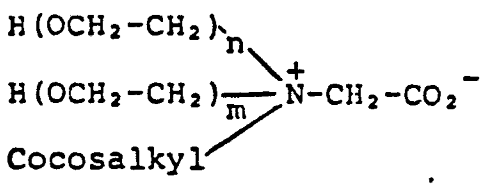 n + m = 10

CDMSB = N-Cocosalkyl-N,N-dimethyl-sulfobetain

CEOSB = 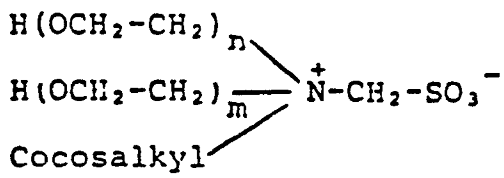 m + n = 10

In Tabelle II sind angegeben:

die Nachbehandlung der Polymerisate, die gemäß Tabelle I hergestellt wurden, die Eigenschaften der so erzeugten Formmassen und die Eigenschaften der aus diesen Formmassen erzeugten Sinterplatten. In der ersten senkrechten Spalte dieser Tabelle ist die laufende Versuchsbezeichnung angegeben, wobei für Vergleichsversuche große Buchstaben und für die erfindungsgemäßen Beispiele Nummern gewählt wurden. In der zweiten senkrechten Spalte zu Tabelle II ist angegeben, welches Polymerisat, hergestellt gemäß Tabelle I, verwendet wurde. In der dritten senkrechten Spalte wurde aus der Tabelle I übernommen, wie viele Gewichtsteile Ethylenvinylacetat-Copolymerisat je 100 Gewichtsteile Vinylchlorid bei der Polymerisation eingesetzt wurden. Die vierte senkrechte Spalte weist den titrimetrisch ermittelten Emulgatorgehalt des dekanterfeuchten Polymerisates in Gewichtsprozent, bezogen auf Trockensubstanz aus. In der fünften senkrechten Spalte ist angegeben, wieviel Emulgator in Gewichtsprozent auf Trockensubstanz nachträglich zum dekanterfeuchten Polymerisat gegeben wurden. Die sechste senkrechte Spalte enthält Angaben über die Art des zugegebenen Emulgators, wobei die gleichen Abkürzungen wie in Tabelle I verwendet wurden. Die siebte senkrechte Spalte zeigt, wie viele Gewichtsprozente, bezogen auf Trokkensubstanz eines Netzmittels, zugegeben wurden. Im Vergleichsversuch B wurde entsprechend der DE-A-26 46 595 ein tertiäres Amin zugesetzt, das mit der überschüssig vorhandenen Sulfonsäure ein als Netzmittel wirksames Salz bildet. Die achte senkrechte Spalte gibt an, welches Netzmittel zugesetzt wurde.

TABELLE II

| Beispiel-Nr. | Polymerisat (Tabelle I) | Polymerisat-Nachbehandlung | | | | | | Eigenschaften der Formmasse | | | | | | | | | Eigenschaften der Sinterplatte | | | | |
|---|---|---|---|---|---|---|---|---|---|---|---|---|---|---|---|---|---|---|---|---|---|
| | | GT EVAc/100 GT VC | Emulgatorgehalt(titr.)Gew.-% | Emulgatorzugabe Gew.-% | Emulgatorart | Netzmittelzugabe Gew.-% | Netzmittelart | K-Wert | Schüttgewicht g/l | Kornverteilung % | | | | mittl. Korndurchmesser µm | Rieselfähigkeit; Trichter-Nr. | Reißfestigkeit Nm | Reißdehnung % | spez. Widerstand Ω cm | kapill. Steighöhe mm | Flexibilität |
| | | | | | | | | | | >125 µm | > 63 µm <125 µm | > 33 µm < 63 µm | < 33 µm | | | | | | | |
| A | VA | - | 0,15 | - | - | 0,02 | CDMB | 70,2 | 420 | 0,1 | 2,1 | 19,8 | 78,0 | 31 | 4 | 12 | 2 | 4,1 | 112 | Bruch |
| B | VB | - | 0,08 | 0,08 | DBS | 0,05 | DHEA | 65,3 | 460 | 0 | 0,7 | 9,1 | 90,2 | 24 | 6 | 9,5 | 5,5 | 3,3 | 127 | Bruch |
| C | VC | 1 | 0,01 | 0,14 | DBS | 0,03 | CDMB | 65,2 | 612 | 0 | 0,9 | 15,1 | 84,0 | 28 | 4 | 6,1 | 5,0 | 2,9 | 125 | Bruch |
| D | VD | 1 | 0,01 | 0,14 | AS | 0,03 | CDMB | 69,5 | 634 | 0,1 | 0,7 | 24,3 | 74,9 | 30 | 4 | 6,3 | 4,7 | 3,1 | 122 | Bruch |
| 1 | $B_1$ | 3 | 0,01 | 0,15 | AS | 0,05 | DDMB | 65,3 | 520 | 0 | 2,9 | 23 | 74,1 | 34 | 4 | 6,7 | 8,4 | 4,6 | 118 | kein Bruch |
| 2 | B2 | 1 | 0,01 | 0,14 | DBS | 0,03 | CDMB | 71,0 | 570 | 0 | 0,7 | 6,2 | 93,1 | 28 | 4 | 7,7 | 9,6 | 4,8 | 119 | kein Bruch |
| 3 | $B_3$ | 5 | 0,04 | 0,11 | DBS | 0,03 | SDMB | 60,2 | 603 | 0,1 | 1,8 | 17,9 | 80,2 | 30 | 4 | 6,8 | 12,8 | 4,2 | 102 | kein Bruch |
| 4 | $B_4$ | 3 | 0,03 | 0,09 | DBS | 0,03 | CEOB | 75,1 | 495 | 0 | 1,1 | 4,8 | 94,1 | 23 | 4 | 3,9 | 19,2 | 4,3 | 83 | kein Bruch |
| 5 | $B_5$ | 1 | 0,02 | 0,13 | AS | 0,03 | CDMB | 75,7 | 480 | 0 | 0,8 | 6,1 | 93,1 | 22 | 4 | 4,1 | 18,5 | 4,3 | 79 | kein Bruch |
| 6 | $B_6$ | 1 | 0,03 | 0,15 | OS | 0,03 | CDMB | 65,6 | 596 | 0 | 0,3 | 4,8 | 94,9 | 21 | 4 | 5,9 | 15,1 | 4,1 | 98 | kein Bruch |
| 7 | $B_7$ | 2 | 0,03 | 0,12 | PNS | 0,05 | CEOB | 71,1 | 510 | 0 | 0,2 | 3,7 | 96,1 | 21 | 4 | 5,0 | 13,7 | 4,2 | 103 | kein Bruch |

TABELLE II (fortgesetzt)

| Beispiel-Nr. | Polymerisat (Tabelle I) | Polymerisat-Nachbehandlung: GT EVAc/100 GT VC | Polymerisat-Nachbehandlung: Emulgatorgehal (titr.) Gew.-% | Polymerisat-Nachbehandlung: Emulgatorzugabe Gew.-% | Polymerisat-Nachbehandlung: Emulgatorart | Polymerisat-Nachbehandlung: Netzmittelzugabe Gew.-% | Polymerisat-Nachbehandlung: Netzmittelart | Eigenschaften der Formmasse: K-Wert | Eigenschaften der Formmasse: Schüttgewicht g/l | Kornverteilung % > 125 µm | Kornverteilung % > 63 µm < 125 µm | Kornverteilung % > 33 µm < 63 µm | Kornverteilung % < 33 µm | mittl. Korndurchmesser µm | Rieselfähigkeit; Trichter-Nr. | Eigenschaften der Sinterplatte: Reißfestigkeit Nm | Reißdehnung % | spez. Widerstand Ω cm | kapill. Steighöhe mm | Flexibilität |
|---|---|---|---|---|---|---|---|---|---|---|---|---|---|---|---|---|---|---|---|---|
| 8 | $B_8$ | 1 | 0,04 | 0,15 | AS | 0,05 | COMSB | 72,3 | 530 | 0 | 1,8 | 4,7 | 93,5 | 30 | 4 | 3,5 | 16,8 | 4,6 | 98 | kein Bruch |
| 9 | $B_9$ | 2 | 0,01 | 0,20 | AS | 0,03 | CEOSB | 82,4 | 570 | 0,1 | 0,5 | 8,7 | 91,7 | 26 | 4 | 4,7 | 14,9 | 4,3 | 101 | kein Bruch |
| 10 | $B_{10}$ | 1 | 0,02 | 0,16 | DBS | 0,03 | COMB | 71,8 | 565 | 0,1 | 2,3 | 19,2 | 78,4 | 28 | 4 | 6,4 | 8,3 | 3,9 | 115 | kein Bruch |

**Patentansprüche**

1. Zu flexiblen Formkörpern sinterfähige, feinteilige Formmasse auf Basis Polyvinylchlorid mit einem K-Wert von 55 bis 90, einem Schüttgewicht von 400 bis 700 g/l, einer mittleren Korngröße von 10 bis 50 µm und einer Kornverteilung von

| | | |
|---|---|---|
| 99 bis 30 Gew.-% | | <33 µm |
| 1 bis 60 Gew.-% | von | 33 bis 63 µm |
| 0 bis 9 Gew.-% | von | 63 bis 125 µm |
| 0 bis 1 Gew.-% | | >125 µm |

welche besteht aus:

I) 99,8 bis 97 Gew.-%, bezogen auf die Formmasse, eines durch Suspensionspolymerisation in wäßriger Phase hergestellten Pfropf-Copolymerisats, das seinerseits besteht aus, jeweils bezogen auf das Pfropf-Copolymerisat:

a) 95 bis 70 Gew.-% polymerisierten Einheiten des Vinylchlorids,

b) 4,4 bis 29,4 Gew.-% polymerisierten Einheiten mindestens eines Acrylsäurealkylesters mit 3 bis 10 C-Atomen in der Alkylgruppe,

c) 0,3 bis 7 Gew.-% polymerisierten Einheiten des Ethylens und

d) 0,3 bis 15 Gew.-% polymerisierten Einheiten des Vinylacetats,

mit der Maßgabe, daß die Menge von d) mindestens 3/7 der Menge von c) und die Summe der Mengen von b) plus c) plus d) 5 bis 30 Gew.-% beträgt; ferner

II) 0,05 bis 0,5 Gew.-% von mindestens einem anionischen oder/und von mindestens einem nicht-ionischen Emulgator mit einem HLB-Wert von 10 bis 40,

III) einem Rest, bestehend aus Suspendiermittel(n), Resten von Aktivatoren und anderen Polymerisationshilfsstoffen, sowie gegebenenfalls geringen Mengen weiterer Zusatzstoffe, mit der Maßgabe, daß die Summe der Mengen von I plus II plus III 100 Gew.-% beträgt.

2. Formmasse nach Anspruch 1 welche besteht aus

α) 99,8 bis 97 Gew.-%, bezogen auf die Formmasse, eines durch Suspensionspolymerisation in wäßriger Phase hergestellten Pfropf-Copolymerisats, das seinerseits besteht aus, jeweils bezogen auf das Pfropf-Copolymerisat:

a) 95 bis 70 Gew.-% polymerisierten Einheiten des Vinylchlorids,

b) 4,4 bis 29,4 Gew.-% polymerisierten Einheiten mindestens eines Acrylsäurealkylesters mit 3 bis 10 C-Atomen in der Alkylgruppe,

c) 0,3 bis 7 Gew.-% polymerisierten Einheiten des Ethylens und

d) 0,3 bis 15 Gew.-% polymerisierten Einheiten des Vinylacetats,

mit der Maßgabe, daß die Menge von d) mindestens 3/7 der Menge von c) und die Summe der Mengen von b) plus c) plus d) 5 bis 30 Gew.-% beträgt; ferner

β) 0 05 bis 0,5 Gew.-%, bezogen auf die Formmasse, mindestens einer der folgenden freien Sulfosäuren: Alkylsulfonsäuren mit 8 bis 16 C-Atomen und Alkylarylsulfonsäuren mit 3 bis 16 C-Atomen in der Alkylkette;

γ) 0,005 bis 0,5 Gew.-%, bezogen auf die Formmasse, von mindestens einem wasserlöslichen Netzmittel, das 12 bis etwa 50 C-Atome und ein quartäres N-Atom enthält, welches mit einer Carbon- oder Sulfonsäuregruppe ein Salz bildet, und

δ) einem Rest, bestehend aus Suspendiermittel(n), Resten von Aktivatoren und anderen Polymerisationshilfsstoffen, sowie gegebenenfalls geringen Mengen weiterer Zusatzstoffe, mit der Maßgabe, daß die Summe der Mengen von α plus β plus γ plus δ 100 Gew.-% beträgt.

3. Formmasse nach Anspruch 1 oder 2, die ein Pfropf-Copolymerisat enthält, welches besteht aus, jeweils bezogen auf das Pfropf-Copolymerisat:

a) 95 bis 70 Gew.-% polymerisierten Einheiten des Vinylchlorids,

b) 10 bis 20 Gew.-% polymerisierten Einheiten mindestens eines Acrylsäurealkylesters mit 3 bis 10 C-Atomen in der Alkylgruppe,

c) 0,3 bis 2,5 Gew.-% polymerisierten Einheiten des Ethylens und

d) 0,3 bis 11 Gew.-% polymerisierten Einheiten des Vinylacetats, mit der Maßgabe, daß die Menge von d) mindestens 3/7 der Menge von c) und die Summe der Mengen b) plus c) plus d) 10 bis 30 Gew.-% beträgt.

4. Formmasse nach Anspruch 2 oder 3, die 0,05 bis 0,25 Gew.-%, bezogen auf die Formmasse, mindestens einer der in Anspruch 2 genannten freien Sulfonsäuren enthält.

5. Formmasse nach einem oder mehreren der Ansprüche 2 bis 4, die 0,01 bis 0,1 Gew.-%, bezogen auf die Formmasse, von mindestens einem in Anspruch 2 genannten Netzmittel enthält.

6. Formmasse nach einem oder mehreren der Ansprüche 1 bis 5, gekennzeichnet durch eine mittlere Teilchengröße von 20 bis 35 µm.

7. Verfahren zur Herstellung einer Formmasse gemäß Anspruch 1, durch Suspensionspolymerisation von Vinylchlorid in wäßriger Phase, in Gegenwart von öllöslichen, radikalisch zerfallenden Aktivatoren, Suspensionsstabilisatoren, Emulgatoren und gegebenenfalls weiteren Polymerisations-Hilfsstoffen bis zu Vinylchlorid-Umsätzen von 70 bis 95 Gew.-%, Abtrennen der Hauptmenge der wäßrigen Phase und Trocknung

des Polymerisates, wobei gegebenenfalls nach der Abtrennung der wäßrigen Phase oder nach der Trocknung weitere Stoffe in feiner Verteilung dem Polymerisat zugesetzt werden, dadurch gekennzeichnet, daß man Vinylchlorid in Gegenwart von mindestens einem Acrylsäurealkylester mit 3 bis 10 C-Atomen in der Alkylgruppe sowie in Gegenwart oder Abwesenheit von Vinylacetat, ferner in Gegenwart eines Mischpolymerisates, das seinerseits besteht aus:

30 bis 70 Gew.-%, bezogen auf das Mischpolymerisat, polymerisierten Einheiten des Ethylens, und

70 bis 30 Gew.-%, bezogen auf das Mischpolymerisat, polymerisierten Einheiten des Vinylacetats, welches ferner ein mittleres Molekulargewicht, osmotisch gemessen, von 5000 bis 200000 aufweist, weiterhin in Gegenwart von

0,01 bis 0,7 Gew.-%, bezogen auf eingesetzte Monomere, mindestens eines anionischen oder/und mindestens eines nichtionischen Emulgators mit einem HLB-Wert von 10 bis 40 polymerisiert, wobei die Mengen der einzusetzenden Monomeren und des Mischpolymeren unter Berücksichtigung des Vinylchlorid-Umsatzes so gewählt werden, daß ein Pfropf-Copolymerisat gebildet wird, welches in seiner Zusammensetzung den Angaben des Anspruchs 1 entspricht, nach Beendigung der Polymerisation und nach Abtrennung der Hauptmenge der wäßrigen Phase im gebildeten Pfropf-Copolymerisat den Emulgator-Gehalt bestimmt und soviel von den in Anspruch 1 genannten Emulgatoren dem Polymerisat in feinverteilter Form zusetzt, daß das Polymerisat insgesamt

0,05 bis 0,5 Gew.-%, bezogen auf das getrocknete Polymerisat, der genannten Emulgatoren enthält.

8. Verfahren nach Anspruch 7, dadurch gekennzeichnet, daß man Vinylchlorid in Gegenwart von mindestens einem Acrylsäurealkylester mit 3 bis 10 C-Atomen in der Alkylgruppe sowie in Gegenwart oder Abwesenheit von Vinylacetat, ferner in Gegenwart eines Mischpolymerisates, das seinerseits besteht aus:

40 bis 60 Gew.-%, bezogen auf das Mischpolymerisat, polymerisierten Einheiten des Ethylens und

60 bis 40 Gew.-%, bezogen auf das Mischpolymerisat, polymerisierten Einheiten des Vinylacetats, welches ferner ein mittleres Molekulargewicht, osmotisch gemessen, von 15 000 bis 50 000 aufweist, polymerisiert, wobei die Mengen der einzusetzenden Monomeren und des Mischpolymeren unter Berücksichtigung des Vinylchlorid-Umsatzes so gewählt werden, daß ein Pfropf-Copolymerisat gebildet wird, welches in seiner Zusammensetzung den Angaben in Anspruch 1 entspricht.

9. Verfahren nach Anspruch 7 oder 8, dadurch gekennzeichnet, daß man als Emulgator(en) 0,01 bis 0,2 Gew.-%, bezogen auf eingesetzte Monomere, von mindestens einer der in Anspruch 2, Abschnitt β) genannten freien Sulfonsäuren verwendet, nach Beendigung der Polymerisation und nach Abtrennung der Hauptmenge der wäßrigen Phase im gebildeten Pfropf-Copolymerisat den Gehalt an freien Sulfonsäuren bestimmt und soviel von den in Anspruch 2 genannten freien Sulfonsäuren und Netzmitteln dem Polymerisat in feinverteilter Form zusetzt, daß das Polymerisat insgesamt

0,05 bis 0,5 Gew.-%, bezogen auf das trockene Polymerisat, der genannten freien Sulfonsäuren und

0,005 bis 0,5 Gew.-%, bezogen auf das trockene Polymerisat, der genannten Netzmittel enthält.

10. Verwendung der Formmassen nach einem oder mehreren der Ansprüche von 1 bis 6 zur Herstellung flexibler, gesinterter Formkörper, insbesondere Separatorplatten und -taschen für elektrische Zellen.

**Claims**

1. A finely divided molding material, based on polyvinyl chloride, which can be sintered to give flexible moldings, has a K-value of 55 to 90, a bulk densitiy of 400 to 700 g/liter, an average particle size of 10 to 50 μm and a particle size distribution of:

| | | |
|---|---|---|
| 99 to 30% by weight | | <33 μm |
| 1 to 60% by weight | from 33 to | 63 μm |
| 0 to 9% by weight | from 63 to | 125 μm and |
| 0 to 1% by weight | | >125 μm, |

and which is composed of:

I) 99.8 to 97% by weight, relative to the molding material, of a graft copolymer which has been prepared by suspension polymerisation in an aqueous phase and which, in turn, has the following composition, in each case relative to the graft copolymer:

a) 95 to 70% by weight of polymerised units of vinyl chloride,

b) 4.4 to 29.4% by weight of polymerised units of at least one alkyl acrylate having 3 to 10 carbon atoms in the alkyl group,

c) 0.3 to 7% by weight of polymerised units of ethylene and

d) 0.3 to 15% by weight of polymerised units of vinyl acetate, subject to the proviso that the amount of d) is at least 3/7 of the amount of c) and the total of the amounts of b) plus c) plus d) is 5 to 30% by weight; and also:

II) 0.05 to 0.5% by weight of at least one anionic and/or at least one nonionic emulsifier having an HLB value of 10 to 40.

III) a residue which is composed of suspending agent(s), residues of activators and other polymerisation auxiliaries, it being possible for the residue also to contain a small amount of at least one further additive, subject to the proviso that the total of the amounts of I plus II plus III is 100% by weight.

2. A molding material as claimed in claim 1, which consists of:

α) 99.8 to 97% by weight, relative to the molding material, of a graft copolymer which has been prepared by suspension polymerisation in an aqueous phase and which, in turn, has the following composition, in each case relative to the graft copolymer:

a) 95 to 70% by weight of polymerised units of vinyl chloride,

b) 4.4 to 29.4% by weight of polymerised units of at least one alkyl acrylate having 3 to 10 carbon atoms in the alkyl group,

c) 0.3 to 7% by weight of polymerised units of ethylene and

d) 0.3 to 15% by weight of polymerised units of vinyl acetate, subject to the proviso that the amount of d) is at least 3/7 of the amount of c) and the total of the amounts of b) plus c) plus d) is 5 to 30% by weight; and also:

β) 0.05 to 0.5% by weight, relative to the molding material, of at least one of the following free sulfonic acids: alkylsulfonic acids having 8 to 16 carbon atoms and alkylarylsulfonic acids having 3 to 16 carbon atoms in the alkyl chain;

γ) 0.005 to 0.5% by weight, relative to the molding material, of at least one water-soluble wetting agent containing 12 to about 50 carbon atoms and a quaternary nitrogen atom which forms a salt with a carboxylic or sulfonic acid group, and

δ) a remainder, composed of suspending agent(s), residues of activators and other polymerisation auxiliaries, and optionally small amounts of further additives, subject to the proviso that the total of the amounts of α plus β plus γ plus δ is 100% by weight.

3. A molding material as claimed in either of claims 1 or 2, containing a graft copolymer which is composed, in each case relative to the graft copolymer, of:

a) 95 to 70% by weight of polymerised units of vinyl chloride,

b) 10 to 20% by weight of polymerised units of at least one alkyl acrylate having 3 to 10 carbon atoms in the alkyl group,

c) 0.3 to 2.5% by weight of polymerised units of ethylene and

d) 0.3 to 11% by weight of polymerised units of vinyl acetate, subject to the proviso that the amount of d) is at least 3/7 of the amount of c) and that the total of the amounts of b) plus c)plus d) is 10 to 30% by weight.

4. A molding material as claimed in either of claims 2 or 3, which contains 0.05 to 0.25% by weight, relative to the molding material, of at least one of the free sulfonic acids mentioned in claim 2.

5. A molding material as claimed in one or more of claims 2 to 4, which contains 0.01 to 0.1% by weight, relative to the molding material, of at least one wetting agent mentioned in claim 2.

6. A molding material as claimed in one or more of claims 1 to 5 characterised by an average particle size of 20 to 35 μm.

7. A process for the preparation of a molding material as claimed in claim 1, by suspension polymerisation of vinyl chloride in an aqueous phase in the presence of oil-soluble activators which break down to give free radicals, suspension stabilisers and emulsifiers and, if appropriate further polymerisation auxiliaries, up to vinyl chloride conversions of 70 to 95% by weight, removing the bulk of the aqueous phase and drying the polymer, further substances in a fine state of division being added to the polymer, after the removal of the aqueous phase or after drying, characterised by polymerising vinyl chloride in the presence of at least one alkyl acrylate having 3 to 10 carbon atoms in the alkyl group and in the presence or absence of vinyl acetate, and also in the presence of a copolymer which, in turn, is composed of: 30 to 70% by weight, relative to the copolymer, of polymerised units of ethylene and 70 to 30% by weight, relative to the copolymer, of polymerised units of vinyl acetate, and which also has an average molecular weight, determined by osmosis, of 5,000 to 200,000, and also in the presence of 0.01 to 0.7% by weight, relative to monomers employed, of at least one anionic emulsifier and/ or at least one nonionic emulsifier having an HLB value of 10 to 40, the amounts of the monomers, and the copolymer, to be employed being so chosen, bearing in mind the vinyl chloride conversion, that a graft copolymer is formed, the composition of which corresponds to the data of claim 1, determining the emulsifier content in the graft copolymer formed, after the completion of the polymerisation and after the removal of the bulk of the aqueous phase, and adding sufficient of the emulsifiers mentioned in claim 1 to the polymer, in a finely divided form, for the polymer to contain a total of 0.05 to 0.5% by weight, relative to the dried polymer, of the said emulsifiers.

8. The process as claimed in claim 7, characterised in that vinyl chloride is polymerised in the presence of at least one alkyl acrylate having 3 to 10 carbon atoms in the alkyl group and in the presence or absence of vinyl acetate, and also in the presence of a copolymer which, in turn, is composed of: 40 to 60% by weight, relative to the copolymer, of polymerised units of ethylene and 60 to 40% by weight, relative to the copolymer, of polymerised units of vinyl acetate, and which also has an average molecular weight, determined by osmosis, of 15,000 to 50,000, the amounts of the monomers and copolymer to be employed being so chosen, bearing in mind the vinyl chloride conversion, that a graft copolymer is formed, the composition of which corresponds to the data in claim 1.

9. The process as claimed in either of claims 7 or 8, characterised in that 0.01 to 0.2% by weight, relative to monomers employed, of at least one of the free sulfonic acids mentioned in claim 2, section β) is used as the

emulsifier(s), the content of free sulfonic acids in the graft copolymer formed is determined after the completion of the polymerisation and after the removal of the bulk of the aqueous phase, and sufficient of the free sulfonic acids and wetting agents mentioned in claim 2 is added to the polymer, in a finely divided form, for the polymer to contain a total of 0.05 to 0.5% by weight, relative to the dry polymer, of the said free sulfonic acids and 0.005 to 0.5% by weight, relative to the dry polymer, of the said wetting agents.

10. Use of the molding materials claimed in one or more of claims 1 to 6 for the preparation of flexible sintered moldings, in particular separator plates and separator compartments for electric cells.

**Revendications**

1. Masse à mouler en particules finement divisées, capable d'être frittée pour former des articles moulés flexibles, à base de chlorure de polyvinyle avec une valeur K de 55 à 90, une densité volumique apparente de 400 à 700 g/l, une dimension moyenne de particule de 10 à 50 µm et une distribution granulométrique:

| | |
|---|---|
| 99 à 30 % en poids | < 33 µm |
| 1 à 60 % en poids | de 33 à 63 µm |
| 0 à 9 % en poids | de 63 à 125 µm |
| 0 à 1 % en poids | > 125 µm |

constituée de:

I) 99,8 à 97 % en poids, par rapport à la masse à mouler, d'un copolymère greffé préparé par polymérisation en suspension en phase aqueuse, qui consiste lui-même, les pourcentages étant à chaque fois rapportés au copolymère greffé, en:

a) 95 à 70 % en poids de motifs polymérisés de chlorure de vinyle,

b) 4,4 à 29,4 % en poids de motifs polymérisés d'au-moins un ester d'alkyle d'acide acrylique en C 3 - C 10 dans le groupe alkyle,

c) 0,3 à 7 % en poids de motifs polymérisés de l'éthylène et

d) 0,3 à 15 % en poids de motifs polymérisés de l'acétate de vinyle,

étant spécifié que la quantité de d) est au moins égale à 3/7 de c) et que la somme des quantités de b) et c) et d) représente de 5 à 30 % en poids; et constituée de plus de

II) 0,05 à 0,5 % en poids d'au-moins un émulsifiant anionique ou/et d'au-moins un émulsifiant non-ionique présentant une valeur HLB de 10 à 40, et de

III) un reste, constitué d'agent(s) de mise en suspension, de restes d'activateurs et d'autres adjuvants de polymérisation, ainsi éventuellement que de petites quantités d'autres additifs étant spécifié que la somme des quantités de I plus II plus III représente 100 % en poids.

2. Masse à mouler selon la revendication 1, constituée de:

α) 99,8 à 97 % en poids, par rapport à la masse à mouler, d'un copolymère greffé préparé par polymérisation en suspension en phase aqueuse, qui consite lui-même, les pourcentages étant à chaque fois rapportes au copolymère greffé en:

a) 95 à 70 % en poids de motifs polymérisés de chlorure de vinyle,

b) 4,4 à 29,4 % en poids de motifs polymérisés d'au-moins un ester d'alkyle d'acide acrylique en C 3 - C 10 dans le groupe alkyle,

c) 0,3 à 7 % en poids de motifs polymérisés de l'éthylène et

d) 0,3 à 15 % en poids de motifs polymérisés de l'acetate de vinyle,

étant spécifié que la quantité de d) est au-moins égale à 3/7 de la quantité de c) et que la somme des quantités de b) et c) et d) représente de 5 à 30 % en poids; et constituée de plus de

β) 0,05 à 0,5 % en poids, par rapport à la masse à mouler d'au-moins l'un des acides sulfoniques libres suivants:

acides alkylsulfoniques en C 8 - C 16 et acides alkylarylsulfoniques en C 3 - C 16 dans la chaîne alkyle;

γ) 0,005 à 0,5 % en poids par rapport à la masse à mouler, d'au-moins un agent mouillant soluble dans l'eau contenant de 12 à environ 50 atomes de carbone, ainsi qu'un atome d'azote quaternaire qui forme un sel avec un groupe acide carboxylique ou acide sulfonique, et

δ) un reste constitué d'agent(s) de mise en suspension, de restes d'activateurs et d'autres adjuvants de polymérisation, ainsi éventuellement que de petites quantités d'autres additifs, étant spécifié que la somme des quantités de α plus β plus γ plus δ représente 100 % en poids.

3. Masse à mouler selon la revendication 1 ou 2, contenant un copolymère greffé, constituée, les pourcentages étant rapportés dans tous les cas au copolymère greffé, de:

a) 95 à 70 % en poids de motifs polymérisés du chlorure de vinyle,

b) 10 à 20 % en poids de motifs polymérisés d'au-moins un ester d'alkyle d'acide acrylique en C 3 - C 10 dans le groupe alkyle,

c) 0,3 à 2,5 % en poids de motifs polymérisés de l'éthylène et

d) 0,3 à 11 % en poids de motifs polymérisés d'acétate de vinyle, étant spécifié que la quantité de d)

représente au-moins 3/7 de la quantité de c) et que la somme des quantités b) plus c) plus d) représente de 10 à 30 % en poids.

4. Masse à mouler selon la revendication 2 ou 3 qui contient de 0,05 à 0,25 % en poids, par rapport à la masse à mouler d'au-moins l'un des acides sulfoniques libres cités dans la revendication 2.

5. Masse à mouler selon une ou plusieurs des revendications 2 à 4, qui contient de 0,01 à 0,1 % en poids par rapport à la masse à mouler, d'au-moins l'un des agents mouillants cités dans la revendication 2.

6. Masse à mouler selon une ou plusieurs des revendications 1 à 5, caractérisée par une dimension moyenne de particule de 20 à 35 µm.

7. Procédé de préparation d'une masse à mouler selon la revendication 1, par polymérisation en suspension de chlorure de vinyle en phase aqueuse, en présence d'activateurs radicalaires, solubles dans l'huile, de stabilisants de suspension, d'émulsifiants et éventuellement d'autres adjuvants de polymérisation, jusqu'à un taux de conversion du chlorure de vinyle de 70 à 95 % en poids, séparation de la fraction principale de la phase aqueuse et séchage du polymère, d'autres substances ou produits étant éventuellement ajoutés après la séparation de la phase aqueuse ou après le séchage, sous une forme finement dispersée, au polymère, caractérisé en ce que l'on effectue la polymérisation du chlorure de vinyle en présence d'au-moins un ester d'alkyle d'acide acrylique en C 3 - C 10 dans le groupe alkyle, aussi bien en présence qu'en absence d'acétate de vinyle, et de plus en présence d'un copolymère, qui lui-même consiste en:

30 à 70 % en poids, par rapport au copolymère, de motifs polymérisés de l'éthylène, et

70 à 30 % en poids, par rapport au copolymère, de motifs polymérisés de l'acétate de vinyle,

et qui de plus présente un poids moléculaire moyen, déterminé par une méthode osmotique de 5 000 à 200 000, et de plus en présence de

0,01 à 0,7 % en poids, par rapport aux monomères introduits, d'au-moins un émulsifiant anionique ou/et d'au-moins un émulsifiant non-ionique présentant une valeur HLB de 10 à 40, la quantité des monomères introduits et du copolymère, étant choisie en tenant compte du taux de conversion du chlorure de vinyle, de telle manière qu'il se forme un copolymère greffé qui correspond en ce qui concerne sa composition aux données de la revendication 1, en ce que l'on détermine, après achèvement de la polymérisation et après séparation de la fraction principale de la phase aqueuse, la teneur en émulsifiant dans le copolymère greffé formé, et en ce que l'on introduit une quantité telle des émulsifiants cités dans la revendication 1 au polymère, sous une forme finement divisée, que le polymère contient au total:

0,05 à 0,5 % en poids, par rapport au polymère sec des émulsifiants cités.

8. Procédé selon la revendication 7, caractérisé en ce que l'on effectue la polymérisation du chlorure de vinyle en présence d'au-moins un ester d'alkyle d'acide acrylique en C 3 - C 10 dans le groupe alkyle, aussi bien en présence qu'en l'absence d'acétate de vinyle, et de plus en présence d'un copolymère qui consiste de son côté en:

40 à 60 % en poids, par rapport au copolymère, de motifs polymérisés de l'éthylène et

60 à 40 % en poids, par rapport au copolymère, de motifs polymérisés d'acétate de vinyle, qui présente de plus un poids moléculaire moyen déterminé par une technique osmotique, de 15 000 à 50 000, la quantité des monomères introduits et du copolymère introduit étant choisie de telle manière, en tenant compte du taux de conversion du chlorure de vinyle, qu'il se forme un copolymère greffé dont la composition correspond aux indications de la revendication 1.

9. Procedé selon la revendication 7 ou 8, caractérisé en ce que l'on utilise comme émulsifiant(s) de 0,01 à 0,2 % en poids, par rapport aux monomères introduits, d'au-moins l'un des acides sulfoniques libres cités dans la revendication 2, paragraphe β), en ce que l'on détermine la teneur en acides sulfoniques libres dans le copolymère greffé formé après achèvement de la polymérisation et après séparation de la fraction principale de la phase aqueuse, et en ce l'on introduit une quantité telle des acides sulfoniques libres et des agents mouillants cités dans la revendication 2, au polymère, sous une forme finement divisée, que le polymère contient au total:

0,05 à 0,5 % en poids, par rapport au polymère sec, des acides sulfoniques libres cités et

0,005 à 0,5 % en poids par rapport au polymère sec, des agents mouillants cités.

10. Utilisation des masses à mouler selon une ou plusieurs des revendications 1 à 6, pour la fabrication d'articules moulés frittés, flexibles, en particulier de plaques de séparateurs et d'enveloppes de séparateurs pour les piles et accumulateurs électriques.